# EUROPEAN PATENT SPECIFICATION

(11) **EP 1 036 674 B1**
(45) Date of publication and mention of the grant of the patent: **08.06.2005**
(21) Application number: 00302075.7
(22) Date of filing: 15.03.2000
(51) Int. Cl.: B60C 11/13, B60C 11/11, B60C 11/04

(54) **Pneumatic tyre**
Luftreifen
Bandage pneumatique

(30) Priority: 16.03.1999 JP 7049399
(43) Date of publication of application: 20.09.2000
(73) Proprietor: Sumitomo Rubber Industries Ltd., Kobe-shi, Hyogo-ken (JP)
(72) Inventor: Hanya, Masahiro, Kobe-shi, Hyogo-ken (JP)
(74) Representative: Manitz, Finsterwald & Partner

(56) References cited:
- EP-A- 0 602 989
- EP-A- 0 849 101
- EP-A- 0 875 403
- FR-A- 2 720 979
- US-A- 4 796 683
- US-A- 5 109 903

## Description

The present invention relates to a pneumatic tyre, more particularly to an improvement in a tread portion with acute-angle intersections of tread grooves which can improve steering stability and wear resistance.

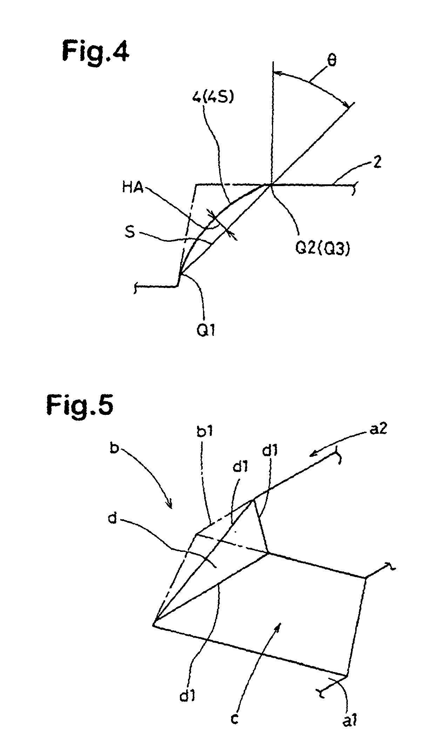

Usually, pneumatic tyres are provided in the tread portion with tread intersecting grooves and tread elements such as blocks, lugs and the like which commonly have acute angle corners formed between tread grooves. As shown in Fig.5 by chain lines, if there is a pointed end (b1) in the acute angle corner, as the strength and rigidity are low, tearing-off and uneven wear starting therefrom are liable to occur. Therefore, such pointed ends (b1) are often cut off beforehand by a flat face (d) as shown in Fig.5. In this case, however, there is a strong possibility that the steering stability of the tyre and the wear resistance of the tread elements deteriorate because the rigidity of the tread elements is decreased.

EP-A-0 849 101 discloses a tyre comprising a tread portion with blocks having acute-angled corners according to the preamble of claim 1. The acute-angled corners are provided with a down slope which becomes steeper from the radially outside to the inside of the tyre. The slope may be convexly curved in a horizontal plane and/or in a perpendicular plane.

US-A-4 796 683 discloses a tyre with reduced unbalanced abrasion in which side walls of blocks of a tyre tread pattern are sloped down to the bottom of main grooves in such a way that an inclination angle between the tread surface normal line and the block side wall increases gradually from the obtuse angle corners of the blocks to the acute angle corners thereof.

It is an object of the present invention to provide a pneumatic tyre in which the steering stability of the tyre and also the wear resistance of the tread elements can be further improved without the tearing-off and uneven wear.

This object is achieved by the features of claim 1.

Preferably, the three-dimensionally convex face is a surface of one of a sphere, ellipsoid, hyperboloid and paraboloid.

When the edges formed between the slope and walls of the two tread grooves are projected on the tyre circumferential surface and the tyre equatorial plane, each of the projected lines is an arc.

As a result the acute-angle corners are improved in rigidity and the angle at the edge of the slope which is formed between the slope and the adjacent surface of the tread element is decreased. By the multiplier effect of the improved rigidity and decreased angle, the steering stability and wear resistance are effectively improved.

An embodiment of the present invention will now be described in detail in conjunction with the accompanying drawings, wherein:
Fig.1 shows an example of the tread pattern of a pneumatic tyre according to the present invention;
Fig.2 is an enlarged plan view showing an acute-angle corner;
Fig.3 is a perspective view thereof;
Fig.4 is a cross sectional view taken along a line I-I of Fig.2; and
Fig.5 is a perspective view of a conventional acute angle corner.

A pneumatic tyre 1 according to the present invention comprises a tread portion 2, a pair of sidewall portions each extending radially inwardly from one of the tread edges, a pair of bead portions each at the radially inner end of one of the sidewall portions. The tread portion 2 is provided in the ground contacting area with tread grooves G. and in the tread portion 2, there are acute-angle corners 3 each defined between two tread grooves G intersecting at an acute angle.

In this embodiment, the tread grooves G are defined as having a width of more than 3.0 mm and provided mainly for the purpose of water drainage. The tread grooves G include circumferential grooves Gm and axial grooves Gy.

The circumferential grooves Gm comprise an axially inner circumferential groove Gm1 and an axially outer circumferential groove Gm2 disposed on each side of the tyre equator C. For the circumferential grooves Gm, a straight groove is used in this example, but it is also possible to use a zigzag groove.

The axial grooves Gy comprise:
inner axial grooves Gy1 which extend axially inwards from the inner circumferential grooves Gm1 but terminate before the tyre equator C to form a circumferentially continuous rib R0 between the inner circumferential grooves Gm1;
middle axial grooves Gy2 which extend between the inner and outer circumferential grooves Gm1 and Gm2 to form circumferential rows R1 of inner blocks; and
outer axial grooves Gy3 which extend between the outer circumferential grooves Gm2 and the tread edges TE to form circumferential rows R2 of outer blocks.

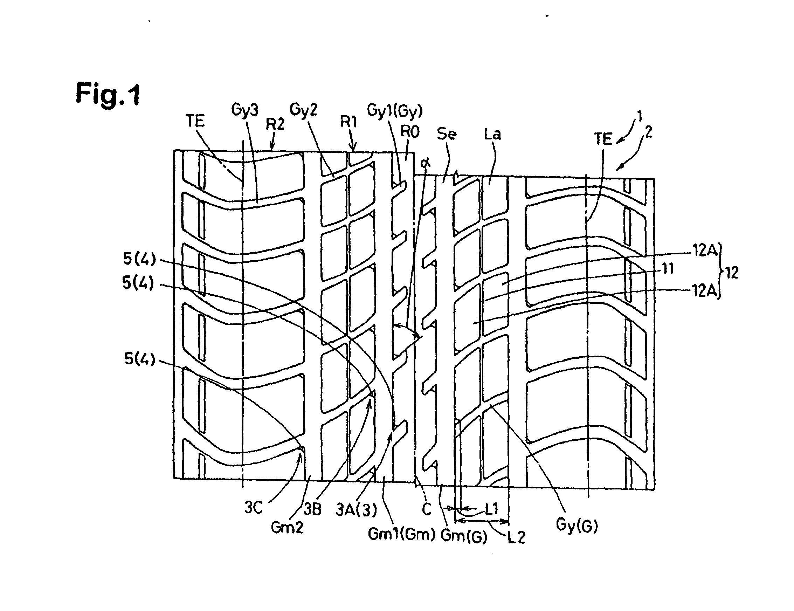

In the example shown in Fig.1, acute-angle corners 3 are each formed between a circumferential groove Gm and the axial groove Gy which is inclined at an angle other than 90 degrees with respect to the axial direction of the tyre. Specifically, on the centre rib R0, acute-angle corners 3A are formed between the inner circumferential grooves Gm1 and inner axial grooves Gy1. On the inner block rows R1, acute-angle corners 3B are formed between the inner circumferential grooves Gm1 and middle axial grooves Gy2. On the outer block rows R2, acute-angle corners 3C are formed between the outer circumferential grooves Gm2 and outer axial grooves Gy3.

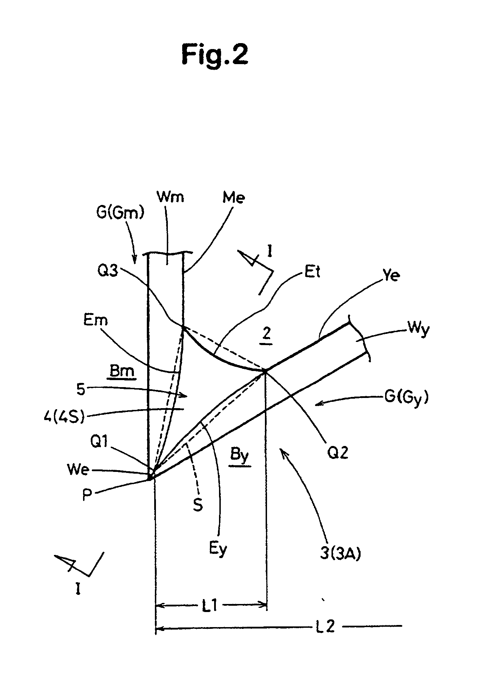

In order to eliminate a pointed end from each of the acute-angle corners 3A to 3C, a slope 4 is formed which is defined by a radially outwardly convex face 4S (see Fig.2). The radially outwardly convex face 4S is a three-dimensionally curved face. It may be a surface of a sphere, ellipsoid of revolution, hyperboloid of revolution, paraboloid of revolution and the like. In this example, a spherical surface is used.

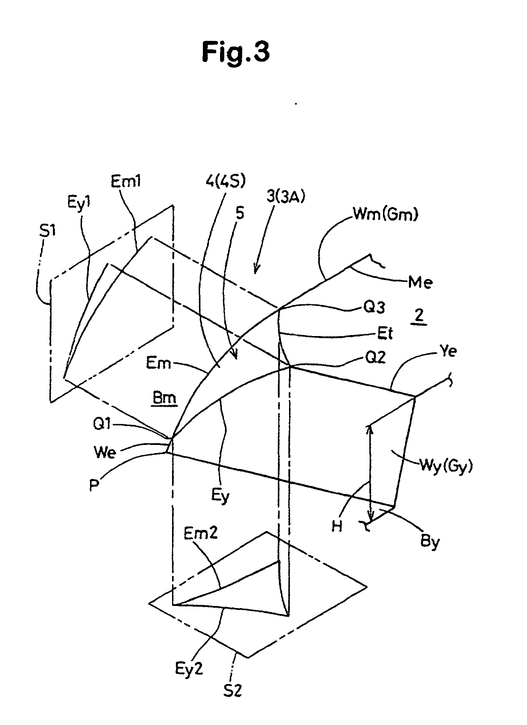

The slope 4 extends radially inwardly from the tread surface and converges to a point Q1 near or at the groove bottom Bm, By. The point Q1 is set in a range of less than 0.3 times the depth H of the groove bottom from the groove bottom. When the point Q1 is not positioned at the groove bottom as shown in Fig.3, a short edge We extending from the point Q1 to a point P at the groove bottom is formed between the groove wall Wm of the circumferential groove Gm and the groove wall Wy of the axial groove Gy. As to the groove bottom, if there is a difference in depth between the two grooves or the circumferential groove Gm and axial groove Gy in this embodiment, the shallow groove bottom is adopted.

The edge Et between the slope 4 and the tread face 2 (or the top surface of the tread element) is curved like an arc. The edge Em between the slope 4 and the groove wall Wm of the circumferential groove Gm is curved like an arc. The edge Ey between the slope 4 and the groove wall Wy of the axial groove Gy is also curved like an arc.

Furthermore, as shown in Fig.3, projected lines Em2 and Ey2 of the edges Em and Ey projected on the tyre circumferential surface S2 and projected lines Em1 and Ey1 of the edges Em and Ey projected on the tyre equatorial plane S1 are each curved like an arc.

In this embodiment, the above-mentioned edge Ey is joined to the edge Ye formed between the groove wall Wy and the tread surface 2 through an inflection point Q2. And the above-mentioned edge Em is joined to the edge Me formed between the groove wall Wm and the tread surface 2 through an inflection point Q3. However, the edges Ey and Em may be joined to the edges Ye and Me without an inflection point.

As shown in Fig.4, when a flat face S passing through the following three points (the point of intersection of the edges Em and Ey or the point Q1; the point of intersection of the edges Et, Ey and Ye or the point Q2; and the point of intersection of the edges Et, Em and Me or the point Q3) is given, the inclination angle θ of this flat face S is set in a range of not less than 25 degrees, preferably not less than 35 degrees, more preferably not less than 45 degrees, but not more than 60 degrees with respect to the normal direction to the tread surface 2. Fig.4 is a cross section being taken along a line I-I of Fig.2 (at a right angle to the flat face S). If the inclination angle θ is less than 25 degrees, the steering stability and wear resistance can not be effectively improved. If the inclination angle θ is more than 60 degrees, the steering stability is liable to decrease.

As the slope 4 is radially outwardly convex, the whole of the slope 4 protrudes from the flat face S as shown in Fig.4, and the amount of protrusion HA is preferably set in a range of from 0.5 to 2.0 mm and/or in a range of from 5 to 25 % of the depth H of the above-mentioned groove bottom for good steering stability and wear resistance.

Further, as shown in Figs.1 and 2, the axial length L1 of the slope 4 is set in the range of from 0.05 to 0.30 times the axial length L2 of the tread element (block) La on which the convex face 4S is provided.

In the example shown in Fig.1, the blocks 12 of the inner block rows R1 are each subdivided into two axial parts 12A by a sipe or narrow groove 11 having a width of less than 3 mm.

The axial grooves Gy1, Gy2 and Gy3 are arranged or aligned as substantially parallel grooves extending continuously from the tread edges to the vicinity of the tyre equator. But, it is also possible to stagger the axial grooves in the tyre circumferential direction.

On each side of the tyre equator C, the number of axial grooves Gy1, the number of axial grooves Gy2 and the number of axial grooves Gy3 are the same in this example. But, it is also possible to have different numbers.

In this example, the acute-angle corners 3A to 3C the angle α of which is not more than 60 degrees are provided with the slope 4, but other acute-angle corners the angle of which is more than 60 degrees are not provided with the slope 4. But, it is also possible to form the slope 4 on all the acute-angle corners.

### Comparison Tests

Test tyres of size 235/45ZR17 (Wheel rim size: 17X8JJ) having the same structure and the same tread pattern shown in Fig.1 except for the acute-angle corners were made and tested for steering stability and resistance to uneven wear. The specifications and test results are shown in Table 1.

### 1) Steering stability test

A 2500cc FR car provided on all the wheels with test tyres was run on dry and wet asphalt roads on a tyre test course, and the steering stability was evaluated into ten ranks by the test driver. The higher the rank, the better the stability. (Inner pressure: 230 kPa)

### 2) Uneven wear resistance test

After the test car had been run for 8000 km, the lateral runout of the test tyre was measured to obtain the difference of the runout caused by wearing of the acute-angle corners from that in the background. In Table 1, the reciprocal of the difference is indicated by an index based on each of the reference tyres being 100. The larger the index, the better the resistance.

**Table 1**

| Tyre | A | | B | | C | |
|---|---|---|---|---|---|---|
| | Ref. | Ex. | Ref. | Ex. | Ref. | Ex. |
| Slope | Flat | spherical | Flat | spherical | flat | spherical |
| Angle θ (deg) | 30 | 30 | 35 | 35 | 45 | 45 |
| L1/L2 | 0.1 | 0.1 | 0.15 | 0.15 | 0.2 | 0.2 |
| HA(mm) | 0 | 0.5 | 0 | 1 | 0 | 2 |
| HA/H (%) | 0 | 6.1 | 0 | 12.2 | 0 | 24.4 |
| Groove depth H (mm) | 8.2 | 8.2 | 8.2 | 8.2 | 8.2 | 8.2 |

| Steering stability | | | | | | |
|---|---|---|---|---|---|---|
| Dry | 6 | 6 | 6 | 7 | 6 | 7 |
| Wet | 6 | 7 | 6 | 7 | 6 | 8 |
| Wear resistance | 100 | 105 | 100 | 109 | 100 | 113 |

As shown by the test results, the example tyres according tc the present invention were improved in steering stability and wear resistance.

## Claims

1. A pneumatic tyre comprising a tread portion (2), the tread portion (2) having acute-angle corners (3) defined between two tread grooves intersecting at an acute angle (α) and provided with a slope (4) extending radially inwardly from the tread face and being defined by a three-dimensionally convex face (4S), **characterised in that** said slope (4) has three edges (Em,Ey,Et) and three intersecting points (Q1,Q2,Q3) therebetween such that a flat face (S) defined as passing through the three intersecting points (Q1,Q2,Q3) is inclined at an angle θ of not less than 25 degrees with respect to a normal direction to the tread surface, and the slope (4,4S) protrudes from the flat face (S) so as to have an amount of protrusion HA in a range of from 0.5 to 2.0 mm and/or in a range of from 5 to 25 % of the depth of the tread groove.

2. A pneumatic tyre according to claim 1, **characterised in that** when edges (Em,Ey) formed between said slope (4) and walls of said two tread grooves are projected on the tyre circumferential surface (S2) and the tyre equatorial plane (S1), each of the projected lines (Em2,Ey2,Em1,Ey1) is an arc.

3. A pneumatic tyre according to claim 1 or 2,
**characterised in that** said three-dimensionally convex face (4,4S) is a surface of a sphere.

4. A pneumatic tyre according to claim 1 or 2,
**characterised in that** said three-dimensionally convex face (4,4S) is a surface of a ellipsoid.

5. A pneumatic tyre according to claim 1 or 2,
**characterised in that** said three-dimensionally convex face (4,4S) is a surface of a hyperboloid.

6. A pneumatic tyre according to claim 1 or 2,
**characterised in that** said three-dimensionally convex face (4,4S) is a surface of a paraboloid.

## Patentansprüche

1. Luftreifen mit einem Laufstreifenabschnitt (2), wobei der Laufstreifenabschnitt (2) spitzwinklige Ecken (3) aufweist, die zwischen zwei Laufstreifenrillen definiert sind, die sich unter einem spitzen Winkel (α) schneiden, und die mit einer Schräge (4) versehen sind, die sich von der Laufstreifenfläche radial nach innen erstreckt und durch eine dreidimensionale konvexe Fläche (4S) definiert ist, **dadurch gekennzeichnet, dass** die Schräge (4) drei Kanten (Em, Ey, Et) und drei Schnittpunkte (Q1, Q2, Q3) dazwischen aufweist, so dass eine flache Fläche (S), die so definiert ist, dass sie durch die drei Schnittpunkte (Q1, Q2, Q3) verläuft, unter einem Winkel θ von nicht weniger als 25 Grad in Bezug auf eine normale Richtung zu der Laufstreifenoberfläche geneigt ist, und die Schräge (4, 4S) von der flachen Fläche (S) derart vorsteht, dass sie einen Betrag an Vorstand HA in einem Bereich von 0,5 bis 2,0 mm und/oder in einem Bereich von 5 bis 25% der Tiefe der Laufstreifenrille aufweist.

2. Luftreifen nach Anspruch 1, **dadurch gekennzeichnet, dass**, wenn die Kanten (Em, Ey), die zwischen der Schräge (4) und den Wänden der beiden Laufstreifenrillen gebildet sind, auf die Umfangsfläche (S2) des Reifens und die Äquatorialebene (S1) des Reifens projiziert werden, jede der projizierten Linien (Em2, Ey2, Em1, Ey1) ein Bogen ist.

3. Luftreifen nach Anspruch 1 oder 2, **dadurch gekennzeichnet, dass** die dreidimensional konvexe Fläche (4, 4S) eine Oberfläche einer Kugel ist.

4. Luftreifen nach Anspruch 1 oder 2, **dadurch gekennzeichnet, dass** die dreidimensional konvexe Fläche (4, 4S) eine Oberfläche eines E1-lipsoids ist.

5. Luftreifen nach Anspruch 1 oder 2, **dadurch gekennzeichnet, dass** die dreidimensional konvexe Fläche (4, 4S) eine Oberfläche eines Hyperboloids ist.

6. Luftreifen nach Anspruch 1 oder 2, **dadurch gekennzeichnet, dass** die dreidimensional konvexe Fläche (4, 4S) eine Oberfläche eines Paraboloids ist.

## Revendications

1. Pneumatique comprenant une portion de bande de roulement (2), la portion de bande de roulement (2) ayant des coins à angle aigu (3) définis entre deux rainures de bande de roulement se croisant à un angle aigu (α) et dotés d'une pente (4) s'étendant dans le sens radial vers intérieur depuis la face de bande de roulement et étant définie par une face convexe en trois dimensions (4S), **caractérisé en ce que** ladite pente (4) a trois rebords (Em, Ey, Et) et trois points d'intersection (Q1, Q2, Q3) entre ces derniers de telle sorte qu'une face plate (S) définie comme passant à travers les trois points d'intersection (Q1, Q2, Q3) est inclinée à un angle θ non inférieur à 25 degrés par rapport à une direction normale vers la surface de la bande de roulement, et la pente (4, 4S) fait saillie depuis la face plate (S) de manière à avoir une quantité de saillie HA dans une plage comprise entre 0,5 et 2,0 mm et/ou dans une plage comprise entre 5 et 25 % de la profondeur de la rainure de bande de roulement.

2. Pneumatique selon la revendication 1, **caractérisé en ce que** lorsque les rebords (Em, Ey) formés entre ladite pente (4) et les parois desdites deux rainures de bande de roulement sont projetés sur la surface périphérique de pneumatique (S2) et le plan équatorial de pneumatique (S1), chacune des lignes projetées (Em2, Ey2, Em1, Ey1) est un arc.

3. Pneumatique selon la revendication 1 ou 2, **caractérisé en ce que** ladite face convexe en trois dimensions (4, 4S) est une surface d'une sphère.

4. Pneumatique selon la revendication 1 ou 2, **caractérisé en ce que** ladite face convexe en trois dimensions (4, 4S) est une surface d'un ellipsoïde.

5. Pneumatique selon la revendication 1 ou 2, **caractérisé en ce que** ladite face convexe en trois dimensions (4, 4S) est une surface d'un hyperboloïde.

6. Pneumatique selon la revendication 1 ou 2, **caractérisé en ce que** ladite face convexe en trois dimensions (4, 4S) est une surface d'un paraboloïde.
